# EUROPÄISCHE PATENTSCHRIFT

(11) **EP 0 864 534 B1**
(45) Veröffentlichungstag und Bekanntmachung des Hinweises auf die Patenterteilung: **25.07.2001**
(21) Anmeldenummer: 98104396.1
(22) Anmeldetag: 11.03.1998
(51) Int. Cl.: C01D 1/30

(54) **Verfahren zur Aufreinigung von Natronlauge**
Process for the purification of sodium hydroxide solution
Procédé de purification d'une lessive d'hydroxyde de soude

(30) Priorität: 13.03.1997 DE 19710449
(43) Veröffentlichungstag der Anmeldung: 16.09.1998
(73) Patentinhaber: BASF AKTIENGESELLSCHAFT, 67056 Ludwigshafen (DE)
(72) Erfinder: Schläfer, Dieter, Dr., 67071 Ludwigshafen (DE); Mauss, Michael, Dr., 67434 Neustadt (DE); Rauls, Matthias, Dr., 67117 Limburgerhof (DE); Baumann, Dieter, 67227 Frankenthal (DE)
(74) Vertreter: Isenbruck, Günter, Dr.

(56) Entgegenhaltungen:
- GB-A- 1 427 310
- US-A- 3 799 749
- US-A- 4 065 270
- DATABASE WPI Section Ch, Week 7847 Derwent Publications Ltd., London, GB; Class E34, AN 78-85039A XP002065484 & JP 53 120 698 A (ISHIKAWAJIMA HARIMA HEAVY IND)

## Beschreibung

Die Erfindung betrifft ein Verfahren zur Aufreinigung von Natronlauge, wie sie bei der Durchführung des elektrolytischen Diaphragma-Verfahrens anfällt, durch Abtrennung von Natriumhydroxid in Form von kristallinem NaOH·3,5H₂O. Insbesondere betrifft die Erfindung ein solches Verfahren zur Gewinnung von besonders reinem kristallinem NaOH·3,5H₂O aus einer lösliche Verunreinigungen wie Natriumchlorid oder Natriumchlorat enthaltenden rohen Natronlauge.

Die industrielle Herstellung von NaOH durch elektrolytische Zersetzung einer wäßrigen Natriumchlorid-Lösung (Chloralkalielektrolyse) erfolgt heute überwiegend nach zwei Verfahren. Im sogenannten Amalgam-Verfahren wird eine Quecksilber-Kathode verwendet, an der Natriummetall unter Amalgambildung abgeschieden wird. Durch nachfolgende Zersetzung des Natrium-Amalgams mit Wasser wird eine im wesentlichen chloridfreie Natronlauge erhalten. Problematisch bei diesem Verfahren ist die Verwendung von Quecksilber als Kathodenmaterial, was besondere Maßnahmen zur Verhinderung von Umweltbelastungen durch Quecksilber erfordert.

Daneben wird in großem Maßstab das Diaphragma-Verfahren betrieben, bei dem die Elektrolysezelle durch ein poröses Diaphragma in Anoden- und Kathodenraum getrennt ist. Im Kathodenraum wird durch Abscheidung von Wasserstoff an einer Stahlkathode als Kathodenflüssigkeit oder sogenannte Zellflüssigkeit eine Lösung mit einem NaOH-Gehalt von üblicherweise 130 bis 150 g/l und einen NaCl-Gehalt von 175 bis 210 g/l erhalten. Diese sogenannte Zellflüssigkeit wird anschließend unter Salzausscheidung auf 50 gew.-%ige Natronlauge eingedampft. Es verbleibt dabei ein hoher Natriumchlorid-Restgehalt von ca. 1 Gew.-% in der Lauge. Ferner können Komponenten der während der Elektrolyse im Kathodenraum gebildeten Lauge durch das poröse Diaphragma in den Anodenraum diffundieren und mit an der Anode gebildetem Chlorgas zu Natriumhypochlorit reagieren. So gebildetes Natriumhypochlorit zerfällt anschließende durch Disproportionierung in Natriumchlorid und Natriumchlorat, wodurch die im Diaphragma-Prozeß gewonnene Natronlauge auch bis zu 1,6 g/kg Natriumchlorat als Verunreinigung enthalten kann. Dieser hohe Gehalt an korrosiven Verunreinigungen ist jedoch bei vielen Anwendungen störend.

Ein bekanntes Verfahren zur Reinigung von Diaphragma-Lauge ist die Extraktion von Natriumchlorid mit flüssigem Ammoniak, durch die sich der NaCl-Gehalt der Lauge auf ca. 0,08 Gew.-% senken läßt. Dieses Verfahren ist durch hohe Investitions- und Betriebskosten gekennzeichnet.

Vorzugsweise erfolgt die Reinigung von Diaphragma-Lauge durch Abtrennung von NaOH in Form kristalliner Natriumhydroxid-Hydrate. In DE-A-26 18 242 ist ein Verfahren zur Reinigung von Natronlauge durch Abtrennung von Natriumhydroxid als Natriumhydroxid-Dihydrat (NaOH·2H₂O) beschrieben. Durch Abkühlung einer NaCl-haltigen, ca. 50 gew.-%igen rohen Natronlauge wird eine NaOH · 2H₂O-Kristalle und feine NaCl-Kristalle enthaltende Aufschlämmung gebildet, aus der die feinen Verunreinigungskristalle durch Flotation unter Adsorption an Bläschen, die durch Verdampfung eines aufgelösten Kühlmittels oder durch Einleiten eines Gases in die Aufschlämmung gebildet werden, entfernt werden. Dieses Reinigungsverfahren ist wegen der notwendigen Trennung der Natriumhydroxid-Dihydrat-Kristalle von gleichzeitig ausfallenden Natriumchlorid-Kristallen technisch aufwendig und erfordert zudem den an sich unerwünschten Einsatz von FCKW - oder ersatzweise den sicherheitstechnisch anspruchsvollen Einsatz brennbarer Gase wie beispielsweise Butan - als Kühl- und Flotationsmittel.

US 3,799,749 beschreibt ein Verfahren zur Aufreinigung von Natronlauge mit einem NaCl-Gehalt von > 1%, bei dem eine unterkühlte, übersättigte NaOH-Lösung hergestellt wird, aus dieser übersättigten Lösung NaOH . 2H₂O und feine NaCl-Kristalle kristallisieren gelassen werden, die feinen NaCl-Kristalle von den großen NaOH . 2H₂O-Kristallen durch eine im Gegenstrom geführte Klassierlösung abgetrennt werden, die Klassierlösung mit den NaCl-Kristallen abgetrennt, die NaCl-Kristalle von von der Klassierlösung abgetrennt und die Klassierlösung durch frische NaOH ergänzt wird und schließlich die NaOH . 2H₂O-Kristalle abgetrennt und gewaschen werden.

Zentrale Schritte des Verfahrens gemäß US 3,799,749 sind die Kopräzipitation von NaOH als NaOH . 2H₂O und kristallinem NaCl, gefolgt von der Abtrennung des kristallinen NaCl mittels einer Klassierlösung. Das Verfahren ist aufwendig.

In weiteren bekannten Verfahren zur Reinigung von NaOH wird Natriumhydroxid als 3,5-Hydrat (NaOH·3,5H₂O) abgetrennt, wobei eine Mitfällung von NaCl vermieden wird. Kristallines NaOH·3,5H₂O ist bei einer Temperatur im Bereich von 5°C bis 15,5°C in 33 gew.-%iger bis 45 gew.-%iger NaOH-Lösung stabil. In Abwesenheit von Impfkristallen kann eine solche 33 gew.-%ige bis 45 gew.-%ige NaOH-Lösung bis zu 20°C unter ihren Sättigungspunkt unterkühlt werden, ohne daß es zur Kristallisation kommt. Die Kristallisation von NaOH·3,5H₂O aus einer solchen übersättigten Lösung wird üblicherweise mit Hilfe von Impfkristallen eingeleitet Nach Fällung kann das Kristallisat durch eine mechanische Fest/Flüssig-Abtrennung von der Mutterlauge der Kristallisation abgetrennt werden.

In DE-A-24 26 282 ist ein Verfahren beschrieben, bei dem eine 33 bis 45 gew.-%ige wäßrige NaOH-Lösung, die durch Aufkonzentrieren der beim Diaphragma-Verfahren anfallenden Zellflüssigkeit erhalten wurde, unter den Sättigungspunkt von NaOH·3,5H₂O abgekühlt und dabei ausfallendes kristallines NaCl abgetrennt wird. Aus der so erhaltenen homogenen übersättigten NaOH-Lösung wird durch Einbringen von NaOH·3,5H₂O-Impfkristallen ohne weitere äußere Kühlung NaOH·3,5H₂O zur Kristallisation gebracht, wobei das Gemisch unter dem Einfluß der Kristallisationswärme oder durch äußere Wärmezufuhr auf die Sättigungstemperatur der Lösung im Hinblick auf NaOH·3,5H₂O erwärmt wird. Das ausgefällte kristalline NaOH·3,5H₂O wird schließlich bei Erreichen der Sättigungstemperatur mit Hilfe eines Zentrifugalabscheiders abgetrennt.

In DE-A-24 34 447 ist eine Variante dieses Verfahrens beschrieben, bei der die Kristallisation von NaOH·3,5H₂O unter Abführung der Kristallisationswärme bei konstanter Temperatur durchgeführt wird.

Nach den beiden letztgenannten Verfahren wurden NaCl-Gehalte von weniger als 1,5 g pro kg NaOH·3,5H₂O erzielt, der minimale NaCl-Gehalt betrug 400 mg/kg. Es werden keine Aussagen über den Gehalt an anderen Verunreinigungen wie Natriumchlorat gemacht.

Nachteilig an beiden Verfahren ist der im Vergleich zu Natronlauge aus dem Amalgam-Verfahren immer noch hohe NaCl-Gehalt der erhaltenen Natronlauge.

Der Erfindung liegt daher die Aufgabe zugrunde, ein Verfahren zur Aufreinigung von Lauge aus dem Diaphragma-Prozeß bereitzustellen, bei dem kristallines NaOH·3,5H₂O mit einem besonders niedrigen Gehalt an Natriumchlorid erhalten wird.

Die Erfindung geht aus von dem bekannten Verfahren zur Herstellung von kristallinem NaOH·3,5H₂O, bei dem man aus einer in bezug auf NaOH·3,5H₂O übersättigten wäßrigen Natronlauge, die Natriumchlorid enthält, NaOH·3,5H₂O kristallisieren läßt und die gebildeten Kristalle mit einer mechanischen Fest/Flüssig-Abtrennvorrichtung von der Lauge abtrennt. Das erfindungsgemäße Verfahren ist dadurch gekennzeichnet, daß die Fest/Flüssig-Abtrennung unter Bedingungen durchgeführt wird, unter denen das kristalline NaOH·3,5H₂O von oberflächlich anhaftenden Laugenresten so weitgehend befreit wird, daß der Natriumchlorid-Gehalt des erhaltenen kristallinen NaOH·3,5H₂O weniger als 100 mg pro kg beträgt.

In einer bevorzugten Ausführungsform wird das kristalline NaOH·3,5H₂O einem zusätzlichen Reinigungsschritt, der gegebenenfalls zumindest das oberflächliche Auflösen der Kristalle einschließt, in Verbindung mit einem Fest/Flüssig-Abtrennschritt unterzogen.

Das so gewonnene NaOH·3,5H₂O-Kristallisat weist einen Natriumchlorid-Gehalt von weniger als 100 mg/kg, vorzugsweise von weniger als 50 mg/kg auf.

Die mit dem erfindungsgemäßen Verfahren erzielte Reinigungswirkung beruht wahrscheinlich darauf, daß die Verunreinigung der NaOH·3,5H₂O-Kristalle nicht im Kristall selbst vorliegt, hervorgerufen etwa durch Einschlüsse oder durch Mischkristallbildung mit in der Mutterlauge gelösten Salzen, sondern auf oberflächlich anhaftende Mutterlauge zurückzuführen ist.

Als Vorrichtung zur Abtrennung des kristallinen NaOH·3,5H₂O kommen bekannte Vorrichtungen zur mechanischen Fest/Flüssig-Abtrennung in Frage. Vorzugsweise wird als Abtrennvorrichtung eine Zentrifuge, Waschkolonne oder ein Filter verwendet. Als Zentrifugen kommen in Frage kontinuierlich oder diskontinuierlich arbeitende Zentrifugen zum Abscheiden von Feststoffen aus Flüssigkeiten, wie Siebzentrifugen, Filterzentrifugen, Dekantier-, Schub- oder Tellerzentrifugen. Bevorzugt wird eine Schubzentrifuge verwendet. Als Filter kommen in Frage ein Bandfilter, ferner gebräuchliche Filterapparaturen wie Druckfilter, Vakuumfilter und Filterzentrifügen, die kontinuierlich oder diskontinuierlich betrieben werden können. Bevorzugt wird ein Bandfilter verwendet.

Bedingungen, unter denen die an der Kristalloberfläche anhaftenden Lösungsreste weitgehend entfernt werden, sind hohe g-Werte und/oder lange Trennzeiten, bei Verwendung eines Bandfilters lange Trennzeiten. Bevorzugte Trennzeiten sind bei Verwendung einer Schubzentrifuge 10 bis 45 Sekunden und bei Verwendung eines Bandfilters 1 bis 10 Minuten. Die Abtrennung in der Schubzentrifuge wird bevorzugt bei einer Zentrifugalbeschleunigung zwischen 600 und 1200 g ausgeführt.

Die Abtrennung kann bei Temperaturen zwischen 10 und 16°C vorgenommen werden. Bevorzugt erfolgt die Abtrennung jedoch bei Temperaturen oberhalb des Schmelzpunktes der NaOH·3,5H₂O-Kristalle (etwa 15°C).

Der zusätzliche Reinigungsschritt kann im Waschen des kristallinen NaOH·3,5H₂O mit Wasser oder mit wäßriger Natronlauge bestehen. Bei Verwendung einer wäßrigen Natronlauge als Waschflüssigkeit sollte diese einen NaCl-Gehalt aufweisen, der unter dem NaCl-Gehalt der Mutterlauge des Kristallisats liegt. Vorzugsweise wird als Waschlauge eine nach dem beschriebenen Verfahren gereingte wäßrige Natronlauge oder eine mit dem Amalgam-Verfahren hergestellte chloridfreie Natronlauge verwendet.

Der zusätzliche Reinigungsschritt kann auch im vollständigen Auflösen und der erneuten Kristallisation der NaOH·3,5H₂O-Kristalle bestehen. In einem solchen zweiten Kristallisationsschritt können die oben genannten - zum Waschen der Kristalle zu verwendenden - Lösungsmittel verwendet werden. Ein vollständiges Auflösen kann auch im vollständigen Einschmelzen der NaOH·3,5H₂O-Kristalle ohne Verwendung zusätzlicher Lösungsmittel bestehen.

Der zusätzliche Reinigungsschritt kann im oberflächlichen Anschmelzen des kristallinen NaOH·3,5H₂O, in Verbindung mit einer mechanischen Fest/Flüssig-Abtrennung, bestehen. Das Anschmelzen kann durch Erwärmung der Kristalle durch einfaches Belassen der Kristalle auf der Abtrennvorrichtung bei Temperaturen oberhalb 15°C erfolgen. Bevorzugt erfolgt die Erwärmung durch Aufblasen von Wasserdampf.

Anschmelzen und Abtrennen der Kristalle können gleichzeitig oder nacheinander durchgeführt werden. Vorzugsweise erfolgt das Anschmelzen gleichzeitig mit dem Abtrennvorgang.

Ein besonders guter Reinigungseffekt wird erzielt, wenn die anfängliche Abtrennung bereits unter Bedingungen durchgeführt wird, unter denen es zu einem oberflächlichen Anschmelzen der Kristalle kommt. Die besondere Reinigungswirkung ist vermutlich darauf zurückzuführen, daß durch das Anschmelzen die aus den oberflächlich anhaftenden Lösungsresten stammenden Verunreinigungen in den geschmolzenen äußeren Kristallschichten der NaOH·3,5H₂O-Kristalle gelöst werden und im Abtrennvorgang mit diesen weggespült werden. Das Aufschmelzmedium ist wärmer, die Abtrennung erfolgt am oder unterhalb des Schmelzpunktes. In einer bevorzugten Ausführungsform erfolgt das Anschmelzen der Kristalle durch Erwärmen durch Aufblasen von Wasserdampf auf die Abtrennvorrichtung während des Abtrennvorganges.

Es können auch mehrere Abtrenn- und Reinigungsvorgänge hintereinander ausgeführt werden.

Als Ausgangslösung wird eine wäßrige Natronlauge mit einem Gehalt an NaOH von 33 bis 45 Gew.-%, vorzugsweise etwa 38 Gew.-%, bezogen auf das Gesamtgewicht der wäßrigen Natronlauge, verwendet. Die aus dieser Lösung im ersten Reinigungsschritt als NaOH·3,5H₂O auskristallisierte Menge an NaOH beträgt - bezogen auf die Gesamtmenge an NaOH -vorzugsweise 10 bis 30 Gew.%.

Die Kristallisation des NaOH·3,5H₂O aus der übersättigten wäßrigen Natronlauge kann nach einem der in DE-A-26 16 242 und DE-A-24 26 282 beschriebenen Verfahren durchgeführt werden. Vorzugsweise wird der Kristallisationsschritt durch Impfkristalle eingeleitet.

Das erhaltene NaOH·3,5H₂O-Kristallisat kann einen Natriumchlorid-Gehalt von weniger als 100 mg/kg, vorzugsweise von weniger als 50 mg/kg, insbesondere 18 - 50 mg/kg aufweisen. Im Fall, daß die wäßrige Natronlauge neben Natriumchlorid noch Natriumchlorat enthält, kann der Natriumchlorat-Gehalt der Kristalle unterhalb der Nachweisgrenze von 10 mg/kg liegen. Der Restsalzgehalt kann titrimetrisch oder ionenchromatographisch/konduktometrisch bestimmt werden. Durch Aufschmelzen der erfindungsgemäßen Kristalle wird eine besonders reine wäßrige Natronlauge erhalten.

Das erfindungsgemäße Verfahren führt zu NaOH·3,5H₂O-Kristallen mit einem besonders niedrigen NaCl-Gehalt, der ca. um einen Faktor 10 niedriger als der NaCl-Gehalt des nach bisherigen Verfahren aus beim Diaphragma-Verfahren anfallender Natronlauge hergestellten kristallinen NaOH·3,5H₂O liegt Besonders vorteilhaft ist auch der geringe Gehalt von weniger als 10 mg an stark oxidierendem Natriumchlorat der erfindungsgemäßen Kristalle. Die aus den Kristallen erhaltene wäßrige Natronlauge hat eine Qualität, die mit der Qualität von nach dem Amalgam-Verfahren hergestellter Natronlauge vergleichbar ist.

Das erfindungsgemäße Verfahren wird zur Aufreinigung von Natronlauge aus dem Diaphragma-Verfahren eingesetzt. Die Erfindung wird anhand des nachfolgenden Beispiels zusätzlich erläutert.

### BEISPIEL:

Ein 1 l fassender Laborkristallisator, der NaOH·3,5H₂O-Impfkristalle enthält, wird mit einer Rate von 2 kg/h kontinuierlich mit einer 38%igen Natronlauge, die einen Natriumchlorid-Gehalt von 0,7 Gew.-% und einem Natriumchlorat-Gehalt von 650 mg/kg aufweist, und die vor Eintritt in den Kristallisator auf 5°C, d.h. um 10°C unter ihren Kristallisationspunkt unterkühlt wurde, beschickt. Die Übersättigung wird nach Eintritt in den Kristallisator durch Kristallbildung abgebaut. Durch die Kristallisationswärme erwärmt sich die gebildete Suspension dabei auf 15°C. Nach 2 h wird die Suspension durch 30 Sekunden langes Zentrifugieren bei 15°C auf einer Laborzentrifuge bei 700 g abgetrennt. Es werden 200 g Kristalle isoliert, die mit 200 g einer Natronlauge mit einem Chlorid-Restgehalt von unter 25 mg/kg und einem Chlorat-Restgehalt von unter 20 mg/kg bei 20°C angemaischt werden. Anschließend werden diese erneut wie zuvor beschrieben abzentrifugiert.

Es werden 150 g Kristalle mit einem Natriumchlorid-Gehalt von 40 mg/kg und einem Natriumchlorat-Gehalt von kleiner als 10 mg/kg erhalten.

## Patentansprüche

1. Verfahren zur Aufreinigung von Natronlauge aus dem Diaphragmaverfahren, bei dem man aus der in bezug auf NaOH·3,5H₂O übersättigten wäßrigen Natronlauge, die Natriumchlorid enthält, NaOH·3,5H₂O kristallisieren läßt und die gebildeten Kristalle mit einer mechanischen Fest/Flüssig-Abtrennvorrichtung von der Lauge abtrennt, dadurch gekennzeichnet, daß die Fest/Flüssig-Abtrennung unter Bedingungen durchgeführt wird, unter denen das kristalline NaOH·3,5H₂O von oberflächlich anhaftenden Laugenresten so weitgehend befreit wird, daß der Natriumchlorid-Gehalt des erhaltenen kristallinen NaOH·3,5H₂O weniger als 100 mg pro kg beträgt.

2. Verfahren nach Anspruch 1, dadurch gekennzeichnet, daß das kristalline NaOH·3,5H₂O einem zusätzlichen Reinigungsschritt, der gegebenenfalls das zumindest oberflächliche Schmelzen oder das zumindest oberflächliche Auflösen der Kristalle einschließt, in Verbindung mit einem Fest/Flüssig-Abtrennschritt unterzogen wird.

3. Verfahren nach Anspruch 2, dadurch gekennzeichnet, daß der zusätzliche Reinigungsschritt im Waschen des abgetrennten kristallinen NaOH·3,5H₂O besteht.

4. Verfahren nach Anspruch 3, dadurch gekennzeichnet, daß zum Waschen Wasser oder wäßrige Natronlauge mit einem NaCl-Gehalt, der unter dem NaCl-Gehalt der abgetrennten wäßrigen Natronlauge liegt, verwendet wird.

5. Verfahren nach Anspruch 2, dadurch gekennzeichnet, daß der zusätzliche Reinigungsschritt im oberflächlichen Anschmelzen des kristallinen NaOH·3,5H₂O in Verbindung mit der mechanischen Fest/Flüssig-Abtrennung, besteht.

6. Verfahren nach Anspruch 2, dadurch gekennzeichnet, daß der zusätzliche Reinigungsschritt im vollständigen Schmelzen oder Auflösen und der erneuten Kristallisation von NaOH·3,5H₂O besteht.

7. Verfahren nach einem der Ansprüche 1 bis 6, dadurch gekennzeichnet, daß die wäßrige Natronlauge neben Natriumchlorid noch Natriumchlorat enthält und das kristalline NaOH·3,5H₂O einen Natriumchlorat-Gehalt von weniger als 10 mg pro kg aufweist.

8. Verfahren nach einem der Ansprüche 1 bis 7, dadurch gekennzeichnet, daß als mechanische Abtrennvorrichtung eine Zentrifuge oder ein Bandfilter verwendet wird.

9. Verfahren nach einem der Ansprüche 1 bis 8, dadurch gekennzeichnet, daß in der eingesetzten wäßrigen Natronlauge der Gehalt an NaOH 33 bis 45 Gew.-%, bezogen auf das Gesamtgewicht der wäßrigen Natronlauge, beträgt.

## Claims

1. A process for purifying caustic soda from the diaphragm process, in which NaOH·3.5H₂O is allowed to crystallize from the aqueous sodium hydroxide solution which contains sodium chloride and is saturated in respect of NaOH·3.5H₂O and the crystals formed are separated from the solution using a mechanical solid/liquid separation apparatus, wherein the solid/liquid separation is carried out under conditions under which the crystalline NaOH·3.5H₂O is freed sufficiently of residual solution adhering to the surface for the sodium chloride content of the crystalline NaOH·3.5H₂O obtained to be less than 100 mg per kg.

2. A process as claimed in claim 1, wherein the crystalline NaOH·3.5H₂O is subjected to an additional purification step, which may include the at least superficial melting or the at least superficial dissolution of the crystals, in combination with a solid/liquid separation step.

3. A process as claimed in claim 2, wherein the additional purification step comprises washing the crystalline NaOH·3.5H₂O separated off.

4. A process as claimed in claim 3, wherein water or aqueous sodium hydroxide solution having an NaCl content which is below the NaCl content of the aqueous sodium hydroxide solution separated off is used for washing.

5. A process as claimed in claim 2, wherein the additional purification step comprises the superficial melting of the crystalline NaOH·3.5H₂O in combination with the mechanical liquid/solid separation.

6. A process as claimed in claim 2, wherein the additional purification step comprises the complete melting or dissolution and the recrystallization of NaOH·3.5H₂O.

7. A process as claimed in any of claims 1 to 6, wherein the aqueous sodium hydroxide solution contains sodium chlorate in addition to sodium chloride and the crystalline NaOH·3.5H₂O has a sodium chlorate content of less than 10 mg per kg.

8. A process as claimed in any of claims 1 to 7, wherein the mechanical separation apparatus used is a centrifuge or a belt filter.

9. A process as claimed in any of claims 1 to 8, wherein the NaOH content of the aqueous sodium hydroxide solution used is from 33 to 45 % by weight, based on the total weight of the aqueous sodium hydroxide solution.

## Revendications

1. Procédé de purification de lessive de soude caustique basé sur le procédé à diaphragme, dans lequel, à partir de la lessive de soude caustique aqueuse sursaturée en NaOH·3,5H₂O et contenant du chlorure de sodium, on fait cristalliser le NaOH·3,5H₂O et l'on sépare de la lessive les cristaux formés au moyen d'un dispositif mécanique solide/liquide, caractérisé en ce que la séparation solide/liquide est entreprise dans des conditions dans lesquelles le NaOH.3,5H₂O cristallin est débarrassé des résidus de lessive adhérant à sa surface de manière que la teneur en chlorure de sodium des cristaux de NaOH.3,5H₂O obtenus soit inférieure à 100 mg par kg.

2. Procédé selon la revendication 1, caractérisé en ce que le NaOH.3,5H₂O cristallin est soumis à une étape de purification additionnelle, comprenant éventuellement la fusion tout au moins superficielle ou la dissolution tout au moins superficielle des cristaux, conjointement avec une étape de séparation solide/liquide.

3. Procédé selon la revendication 2, caractérisé en ce que l'étape additionnelle de purification consiste en un lavage des cristaux de NaOH·3,5H₂O isolés.

4. Procédé selon la revendication 3, caractérisé en ce que l'on utilise, pour le lavage, de l'eau ou une lessive de soude caustique aqueuse d'une teneur en NaCl inférieure à la teneur en NaCI de la lessive de soude caustique aqueuse séparée.

5. Procédé selon la revendication 2, caractérisé en ce que l'étape de purification additionnelle consiste en une fusion superficielle du NaOH·3,5H₂O cristallin en combinaison avec l'étape de séparation solide/liquide mécanique.

6. Procédé selon la revendication 2, caractérisé en ce que l'étape de purification additionnelle consiste en la fusion ou la dissolution totale et la recristallisation du NaOH.3,5H₂O.

7. Procédé selon l'une des revendications 1 à 6, caractérisé en ce que la lessive de soude caustique aqueuse contient, outre du chlorure de sodium, du chlorate de sodium également, et que le NaOH.3,5H₂O cristallin présente une teneur en chlorate de sodium inférieure à 10 mg par kg.

8. Procédé selon l'une des revendications 1 à 7, caractérisé en ce que l'on utilise comme dispositif de séparation mécanique une centrifugeuse ou un filtre à bande.

9. Procédé selon l'une des revendications 1 à 8, caractérisé en ce que la teneur en NaOH de la lessive de soude caustique aqueuse mis en oeuvre est de 33 à 45% en poids, par rapport au poids total de la lessive de soude caustique.
